(19) Europäisches Patentamt
European Patent Office
Office européen des brevets

(11) EP 0 827 636 B1

(12) # EUROPÄISCHE PATENTSCHRIFT

(45) Veröffentlichungstag und Bekanntmachung des Hinweises auf die Patenterteilung:
**23.12.1998 Patentblatt 1998/52**

(21) Anmeldenummer: **96914924.4**

(22) Anmeldetag: **16.04.1996**

(51) Int Cl.[6]: **H01M 10/40**, H01M 4/50, C01G 45/00

(86) Internationale Anmeldenummer:
**PCT/EP96/01592**

(87) Internationale Veröffentlichungsnummer:
**WO 96/34423 (31.10.1996 Gazette 1996/48)**

(54) **ELEKTROCHEMISCHES LITHIUM-SEKUNDÄRELEMENT**

ELECTROCHEMICAL LITHIUM SECONDARY ELEMENT

PILE SECONDAIRE ELECTROCHIMIQUE AU LITHIUM

(84) Benannte Vertragsstaaten:
**AT BE CH DE DK ES FI FR GB GR IE IT LI NL PT SE**

(30) Priorität: **28.04.1995 DE 19515630**

(43) Veröffentlichungstag der Anmeldung:
**11.03.1998 Patentblatt 1998/11**

(73) Patentinhaber: **VARTA Batterie Aktiengesellschaft**
**30419 Hannover (DE)**

(72) Erfinder:
- **PRAAS, Hans-Walter**
  **D-65779 Kelkheim (DE)**
- **KEMMLER-SACK, Sibylle**
  **D-72074 Tubingen (DE)**
- **ENDRES, Peter**
  **D-72108 Rottenburg (DE)**

(74) Vertreter: **Kaiser, Dieter Ralf, Dipl.-Ing. et al**
**Gundelhardtstrasse 72**
**65779 Kelkheim (DE)**

(56) Entgegenhaltungen:
**DE-A- 4 024 468** **DE-A- 4 328 755**
**US-A- 5 196 279** **US-A- 5 449 577**

- **DATABASE INSPEC INSTITUTE OF ELECTRICAL ENGINEERS, STEVENAGE, GB Inspec No. 4827076, STOYANOVA R ET AL: "Effect of Mn-substitution for Co on the crystal structure and acid delithiation of LiMn/sub y/Co/sub 1-y/O/sub 2/ solid solutions" XP002009534 & SOLID STATE IONICS, DIFFUSION & REACTIONS, NOV. 1994, NETHERLANDS, Bd. 73, Nr. 3-4, ISSN 0167-2738, Seiten 233-240,**

EP 0 827 636 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein elektrochemisches Sekundärelement mit einer negativen Elektrode, enthaltend Lithium als aktives Material, einer positiven Elektrode mit einem Lithiummanganoxid-Spinell als aktives Material und einem nichtwässrigen Elektrolyten.

In das Anwendungsgebiet der Erfindung fallen damit alle Sekundärelemente, deren negative Elektroden aus Lithiummetall, einer Lithiumlegierung oder aus einem zur Li-Intercalation befähigten Kohlenstoffmaterial bestehen.

Die Bedeutung von Lithiummanganoxid-Spinellen für die Entwicklung neuer wiederaufladbarer Batteriesysteme geht bereits aus einer Reihe von Patentveröffentlichungen, z.B. US-PS 4507371, US-PS 4828834, US-PS 4904552, US-PS 5240794, hervor. Die als aktives Elektrodenmaterial besonders geeigneten Vertreter dieser Verbindungsgruppe kristallisieren in einem Spinellgitter mit kubisch-dichter Anordnung der Sauerstoffatome, z.B. $LiMn_2O_4$ und $Li_4Mn_5O_{12}$. Extraktion des Li aus $LiMn_2O_4$ mit einer verdünnten Mineralsäure ($H_2SO_4$, $H_3PO_4$, $HNO_3$, $HClO_4$ oder HCl) oder auch auf elektrochemischem Wege führt zur Bildung eines $\lambda$-$MnO_2$. Bei diesem liegt eine defekte Spinellstruktur mit verkleinerter Gitterkonstanten vor.

Andere Verbindungen wie $LiMnO_2$ weisen ein oktaederisch verzerrtes Kochsalzgitter auf. Im $Li_2MnO_3$ bilden die Sauerstoffatome eine kubisch-dichte Packung, bei der sich $Li^+$- und $Mn^{4+}$-Ionen in abwechselnder Schichtenfolge auf die Oktaederlücken verteilen.

Die erwähnten Verbindungen $LiMn_2O_4$ und $Li_4Mn_5O_{12}$ sind stöchiometrische Spinelle (DE-OS 4119944). Das als Kathode in wiederaufladbaren Zellen und Batterien bereits häufig verwendete $LiMn_2O_4$ wird hergestellt, indem man ein Lithiumsalz oder Lithiumhydroxid mit einem Manganoxid bei Temperaturen oberhalb 750°C reagieren läßt.

Im kubischen Sauerstoffgitter des $LiMn_2O_4$-Spinells befinden sich die $Li^+$-Ionen in Tetraederlücken und die $Mn^{3+}$/$Mn^{4+}$ -Ionen in Oktaederlücken. Die Gitterkonstante beträgt 8,25Å.

Der Li-reichere Spinell $Li_4Mn_5O_{12}$ läßt sich stöchiometrisch wie hinsichtlich der Atomverteilung auch durch die Formel $Li[Li_{1/3}Mn_{5/3}]O_4$ beschreiben. Er enthält, wie das $\lambda$-$MnO_2$, ausschließlich 4-wertiges Mangan. Die Kristallsymmetrie ist ebenfalls kubisch, die Gitterkonstante jedoch wegen der Substituierung der größeren $Mn^{3+}$-Ionen (r = 0,645Å), welche die Hälfte des Mangans im $LiMn_2O_4$ ausmachen, durch die kleineren $Mn^{4+}$-Ionen (r = 0,530Å) beträchtlich auf 8,17Å verkleinert.

Obwohl die Substitution des $Mn^{3+}$ durch $Li^+$ gemäß $3Mn^{3+} \rightarrow Li^+ + 2Mn^{4+}$ einen höheren Li-Gehalt des $Li_4Mn_5O_{12}$ insgesamt bedingt, verglichen mit dem des $LiMn_2O_4$, ist die Konzentration des elektrochemisch aktiven Li nicht erhöht, weil nur das in den Tetraederlücken befindliche Lithium unter normalen Potentialbedingungen einer elektrochemischen Aus- und Einlagerung zugänglich ist. Das zusätzlich eingelagerte Lithium teilt sich nämlich mit dem Mangan die Oktaederlücken und ist dort immobilisiert.

Es ist auch bekannt, daß Lithiumbatterien mit Lithiummanganoxidverbindungen als Kathodenmaterial bei 4V und bei 3V betrieben werden können. Ist der Spinell $LiMn_2O_4$ das Entladeprodukt, so läßt sich dieses durch Auslagern von Li wieder aufladen, wodurch die durchschnittliche Oxidationsstufe des Mn von 3,5 auf 4 (im $\lambda$-$MnO_2$) ansteigt. Ein solches Kathodenmaterial, entsprechend der allgemeinen Zusammensetzung $Li_{1-x}Mn_2O_4$ mit $0<x<1$, läßt sich für ein 4V-System verwenden. Die Spinellstruktur bleibt über den gesamten Zusammensetzungsbereich erhalten und das Mn/O-Verhältnis konstant.

Im Falle eines 3V-Systems stellt der Spinell $LiMn_2O_4$ das Kathodenmaterial der allgemeinen Zusammensetzung $Li_{1+x}Mn_2O_4$ mit $0<x<1$ im geladenen Zustand dar. Seine Entladung (Einlagerung von Li) führt am Ende zu $Li_2Mn_2O_4$ mit tetragonaler Kristallsymmetrie. Das Elektrodenmaterial wird dadurch 2-phasig mit den nachteiligen Folgen, daß die Reversibilität der Elektrodenreaktion nachläßt (verminderte Zyklenfestigkeit) und daß die in der $Li_2Mn_2O_4$-Phase ausschließlich im 3-wertigen Zustand vorliegenden Mn-Ionen gemäß $2Mn^{3+} \rightarrow Mn^{4+} + Mn^{2+}$ zur Disproportionierung neigen, wobei sie sich als $Mn^{2+}$ im Elektrolyten auflösen.

Um die tetragonale Verzerrung der Spinellstruktur wenigstens zum Teil aufzuhalten, wurde in der DE-OS 4328755 für das Kathodenmaterial bereits eine Stöchiometrie $Li_{1+x}Mn_{2-x}O_{4+\delta}$ mit $0 \leq x < 0,33$ und $0 \leq \delta < 0,5$ vorgeschlagen, wobei die Laufparameter x und $\delta$ so gewählt sein sollen, daß das Material im entladenen Zustand, in dem es eingesetzt wird, noch gerade eine kubische Symmetrie (Spinellgitter) aufweist und der mittlere Oxidationsgrad des Mn nicht unter 3,5 liegt.

Im Gegensatz zu den vorgenannten "sauerstoffreichen" Spinellen steht ein sauerstoffdefizitärer Spinell $Li(Li_{1/3}Mn_{5/3})O_{4-\delta}$, der von M.N. Richard et al. (Solid State Ionics 73 (1994) 81-91) charakterisiert wurde. Hier bedingt wachsendes $\delta$ (Sauerstoffmangel) einen von 4 gegen 3,5 hin abnehmenden durchschnittlichen Oxidationsgrad des Mn. Dadurch kann Li unter gleichzeitiger Oxidation von $Mn^{3+}$ deintercaliert werden, so daß auch ein solcher Spinell als reversibel arbeitendes Kathodenmaterial grundsätzlich verwendbar ist.

Allen bekannten Li-reichen Spinellen vom Typ $Li_{1+x}Mn_{2-x}O_4$ und allen sauerstoffreichen Spinellen vom Typ $Li_{1-x}Mn_{2-x}O_{4+\delta}$ gemeinsam ist eine relativ niedrige Feststoff- und Schüttdichte mit großen globulitischen Kristalliten sowie einer relativ hohen BET-Oberfläche (>$3m^2/g$). Die mit den Kathodenmaterialien erzielbaren Kapazitäten schwanken je nach Größe von x zwischen 120mAh/g und 10mAh/g.

Verbindungen vom Typ $Li_{1+x}Mn_2O_4$ weisen mit zunehmender Annäherung an das stöchiometrische $Li_2Mn_2O_4$ dessen tetragonale Kristallstruktur auf (Zweiphasengebiet) und fallen damit kristallchemisch nicht mehr in das Existenzgebiet der kubischen Spinelle. Diese Li-reichen 3V-Materialien sind außerdem, insbesondere $Li_2Mn_2O_4$, bereits an Luft instabil und feuchtigkeitsempfindlich.

In den meisten Fällen können eine verbesserte Hochtemperaturlagerfähigkeit und eine befriedigende Zyklenstabilität nur durch niedrige Kapazitäten erkauft werden.

Der Erfindung liegt daher die Aufgabe zugrunde, ein Kathodenmaterial auf der Grundlage eines Lithiummanganoxid-Spinells verfügbar zu machen, das von den vorgenannten Mängeln möglichst frei ist und in bei 3V oder 4V zu betreibenden Lithiumbatterien eingesetzt werden kann.

Die Aufgabe wird erfindungsgemäß durch ein elektrochemisches Sekundärelement mit einer positiven Elektrode gelöst, wie sie in Patentanspruch 1 definiert ist.

Es wurde gefunden, daß Lithiummanganoxid-Spinelle der Zusammensetzung

$$Li_{1+x}Mn_{2-x}O_{4-\delta} \text{ mit } 0 \leq x \leq 0{,}33 \text{ und } 0{,}01 \leq \delta \leq 0{,}5$$

die Erwartungen erfüllen. Ausgenommen sind jedoch alle Verbindungen, für die $x=½\delta \pm 0{,}01$ gilt, wobei x in der genannten Beziehung von $\delta$ abhängig ist. Bevorzugt werden Werte von $0{,}02 \leq \delta \leq 0{,}5$, insbesondere von $0{,}05 \leq \delta \leq 0{,}5$.

Die Werte von x und $\delta$ erfindungsgemäßer Lithiummanganoxid-Spinelle sind dabei derart, daß die Oxidationsstufe des zentralen Mangankations zwischen 3,0 und 4,0 liegt. Dabei handelt es sich bei den Verbindungen um O-defizitäre Spinelle, die vorzugsweise phasenrein sind und sich kubisch indizieren lassen.

Besonders vorteilhafte Spinelle gemäß der Erfindung genügen der Zusammensetzung

$$Li_{1+x}Mn_{2-x}O_{4-\delta} \text{ mit } 0 \leq x \leq 0{,}33 \text{ und } 0{,}05 \leq \delta \leq 0{,}5,$$

wobei alle Zusammensetzungen mit $x = ½\,\delta \pm 0{,}05$ ausgenommen sind.

Die erfindungsgemäßen Spinelle sind als Elektrodenmaterial in Lithium-Sekundärbatterien geeignet, wobei sie den Sekundärbatterien eine verbesserte Anfangskapazität, Zyklenstabilität und Unempfindlichkeit gegen Hochtemperaturlagerung verleihen. Darüber hinaus weisen die neuen Lithiummanganoxid-Spinelle eine gegenüber den bekannten Spinellen nahezu verdoppelte Schüttdichte auf, die zu einer Verdoppelung der volumetrischen Energiedichte ausgedrückt in Watt pro Liter führt.

Die Oxidationsstufe des zentralen Mangankations sollte hierbei vorzugsweise in den Grenzen 3,4 und 3,8 liegen.

In einer Variante der erfindungsgemäßen Spinelle kann der über $Li_{1,0}$ hinausgehende Li-Überschuß x teilweise oder ganz durch fremde ein- oder mehrwertige Kationen ersetzt werden.

Für eine solche Teilsubstitution des Li eignen sich vorzugsweise die Elemente Co, Mg, Zn, Ni, Ca, Bi, Ti, V, Rh und Cu. Der Mengenanteil der Fremddotierung hängt von der Wertigkeit des betreffenden Kations ab. Ist D das Dotierungselement und b dessen Wertigkeit, so lautet die allgemeine Formel für einen solchen Spinell, wenn der gesamte Li-Anteil x durch D ersetzt ist, $Li_1D_{x/b}Mn_{2-x/b}O_{4-\delta}$.

Zum besseren Verständnis wird die Erfindung nachfolgend anhand einiger Figurendarstellungen erläutert.

- Figur 1 zeigt ein Phasendiagramm für Lithiummanganoxid-Verbindungen.
- Figur 2 zeigt eine Ausschnittsvergrößerung des Phasendiagramms von Figur 1 (Sauerstoffgehalt $O_x$).
- Figur 3 zeigt das Röntgen-Pulverdiffraktogramm eines O-defizitären Spinells gemäß Erfindung (relative Intensität).
- Figur 4 zeigt Oxidationsgrade des zentralen Mangankations O-defizitärer Spinelle in Abhängigkeit vom Li-Gehalt (Sauerstoffgehalt $O_x$).
- Figur 5 zeigt Entladekapazitäten bei 5. Entladung O-defizitärer Spinelle in Abhängigkeit vom Li-Gehalt.
- Figur 6 zeigt die Kapazitäten bei 5. Entladung vor und nach einer Hochtemperaturlagerung O-defizitärer Spinelle

Zur Darstellung der Phasenbeziehungen zwischen definierten Lithiummanganoxid-Spinellen wurde gemäß Figur 1 ein zwischen den Eckpunkten MnO, $MnO_2$ und $Li_2MnO_3$ aufgespanntes gleichschenkliges Dreieck gewählt. In diesem Phasendiagramm liegen Spinelle, die sich aus der allgemeinen Formel $Li_{1+x}Mn_{2-x}O_{4+\delta}$ mit $0<x<0{,}33$ und $0<\delta<0{,}5$ ableiten und aus der Patentliteratur (vgl. DE-OS 4328755) bereits bekannt sind, in dem Dreieck, das durch die Eckpunkte $LiMn_2O_4$, $Li_{4/3}Mn_5/_3O_4$ und $Li_2Mn_4O_9$ definiert ist. Das Existenzgebiet bekannter Spinelle schließt auch die Verbindungslinien zwischen den genannten Eckpunkten mit ein. Die Verbindungslinie zwischen $LiMn_2O_4$ und $Li_{4/3}Mn_{5/3}O_4$ beispielsweise kennzeichnet zugleich einen einphasigen Übergang zwischen diesen beiden "idealen" Spinellphasen.

Zur besseren Übersicht über die Phasenbeziehungen zeigen zur $Li_2MnO_3$-$MnO_2$-Seite des Diagramms parallel

verlaufende Linien im Schnittpunkt mit der $MnO$-$MnO_2$-Seite den jeweiligen Manganoxidationsgrad an. Hingegen weisen die schräg durch das Dreieck verlaufenden Linien (a) auf die Richtung hin, in der sich Auslagerung und Wedereinlagerung des Lithiums vollziehen. So endet die Lithiumauslagerung z.B. aus $LiMn_2O_4$ -theoretisch- beim $\lambda$-$MnO_2$. Die schräg verlaufenden Linien stellen somit Lade-/Entladekennlinien dar.

Das Existenzgebiet erfindungsgemäßer Spinelle mit Sauerstoffdefizit erstreckt sich nun innerhalb der Fläche, die von den vier Eckpunkten $LiMn_2O_4$, $Li_2Mn_4O_7$, $Li_8Mn_{10}O_{21}$ und $Li_{4/3}Mn_{5/3}O_4$ festgelegt ist, ausgenommen alle diejenigen Verbindungen, die auf der Verbindungslinie $LiMn_2O_4$-$Li_2Mn_2O_4$ liegen (aus US-PS 5196279 bereits bekannt), und ausgenommen die auf der Verbindungslinie $LiMn_2O_4$-$Li_{4/3}Mn_{5/3}O_4$ liegenden bekannten Verbindungen einschließlich der Eckverbindungen (vgl. US-PS 5316877).

Wie man erkennt, kann der Oxidationsgrad des zentralen Mangankations innerhalb dieses Gebietes Werte zwischen 3,0 (in $Li_2Mn_4O_7$) und 4,0 (in $Li_{4/3}Mn_{5/3}O_4$) annehmen.

Die äußeren Eckpunkte $Li_2Mn_4O_7$ und $Li_8Mn_{10}O_{21}$ ergeben sich aus der allgemeinen Formel nach Anspruch 1 durch Einsetzen von x=0 und $\delta$=0,5 bzw. x=0,33 und $\delta$=0,5 und Normieren auf ganzzahlige Atomparameter.

Wie aus dem Diagramm ferner ersichtlich, umfaßt das neue Kathodenmaterial Manganoxidationsgrade von 3,0 bis 4,0. Es kann dementsprechend bei Li-reicheren Zusammensetzungen für 3V-Systeme und bei Li-ärmeren Zusammensetzungen für 4V-Systeme Anwendung finden.

Nähere Einzelheiten über das Existenzgebiet der O-defizitären Spinelle gemäß Erfindung lassen sich der Ausschnittsvergrößerung des Phasendiagramms nach Fig. 2 entnehmen.

Der durch Patentanspruch 1 definierte Bereich wird von den Verbindungslinien

$$Li_{1.0}Mn_{2.0}O_{3.99} - Li_{1.0}Mn_{2.0}O_{3.5}\ (\equiv Li_2Mn_4O_7),$$

$$Li_{1.0}Mn_{2.0}O_{3.5} - Li_{1.33}Mn_{1.67}O_{3.50}(Li_{4/3}Mn_{5/3}O_{3.50} \equiv Li_8Mn_{10}O_{21})$$

$$Li_{1.33}Mn_{1.67}O_{3.50} - Li_{1.33}Mn_{1.67}O_{3.99}\ (Li_{4/3}Mn_{5/3}O_{3.99}),$$

$$Li_{1.33}Mn_{1.67}O_{3.99} - Li_{1.0}Mn_{2.0}O_{3.99}$$

eingegrenzt, wobei alle Zusammensetzungen, die auf der Verbindungslinie $Li_{1.0}Mn_{2.0}O_4$ - $Li_{1.25}Mn_{1.75}O_{3.50}$ liegen, sich durch das konstante Mn/O-Verhältnis von 1:2 auszeichnen und aus US-PS 5196279 bereits bekannt sind, ausgenommen sind. Ausgenommen ist auch ein Bereich um die genannte Verbindungslinie, der sich zwischen den Eckverbindungen $Li_{1.0}Mn_{2.0}O_{3.99}$, $Li_{1.24}Mn_{1.76}O_{3.50}$, $Li_{1.26}Mn_{1.74}O_{3.50}$, $Li_{1.01}Mn_{1.99}O_{3.99}$, erstreckt und allgemein durch $Li_{1+x}Mn_{2-x}O_{4-\delta}$, mit $0{,}01 \leq \delta \leq 0{,}5$ und $x = ½\ \delta \pm 0{,}01$ definiert ist.

Vorzugsweise liegt der aus dem Existenzgebiet erfindungsgemäßer Spinelle ausgenommene Bereich jedoch zwischen den Eckverbindungen $Li_{1.0}Mn_{2.0}O_{3.99}$, $Li_{1.20}Mn_{1.80}O_{3.50}$, $Li_{1.30}Mn_{1.70}O_{3.50}$, $Li_{1.07}Mn_{1.93}O_{3.95}$. Dieser ergibt sich aus der allgemeinen Formel, wenn $0{,}05 \leq \delta \leq 0{,}5$ und $x = ½\ \delta \pm 0{,}05$.

Die auf der Verbindungslinie $Li_{1.0}Mn_{2.0}O_4$-$Li_{4/3}Mn_{5/3}O_4$ liegenden Spinelle sind nicht - sauerstoffdefizitär und bilden einen einphasigen Übergang.

Erfindungsgemäße O-defizitäre Spinelle werden nach einem an sich für Spinelle allgemein gebräuchlichen keramischen Verfahren hergestellt. Das Verfahren umfaßt folgende Schritte:

a. Reaktion eines lithiumhaltigen Bestandteils, ausgewählt aus der Gruppe Lithiumsalze, LiOH x $H_2O$, $Li_2CO_3$, mit einem Manganoxid bei Temperaturen zwischen 350°C und 900°C

b. Nachglühen des Materials bei 500°C bis 850°C und gegebenenfalls stufenweises Abkühlen.

In einer vorteilhaften Abwandlung des Verfahrens ist erfindungsgemäß vorgesehen, daß nach der Reaktion des lithiumhaltigen Bestandteils mit Manganoxid das Reaktionsprodukt in einer $Ar/H_2$-Atmosphäre bei 600°C bis 850°C behandelt wird, daß die Abkühlung des erhaltenen Materials auf Raumtemperatur unter $Ar/H_2$ erfolgt und daß ein Nachglühen des Materials bei 500°C bis 850°C und gegebenenfalls stufenweises Abkühlen unter $Ar/O_2$ angeschlossen wird.

Die Abkühlung unter $Ar/H_2$ kann unter langsamem Tempern geschehen; vorteilhaft kann jedoch auch ein Abschrekken sein.

Als Ausgangsmaterialien können außer elektrolytischem Mangandioxid (EMD) chemisch hergestelltes Mangandioxid (CMD), P-CMD, NMD (Naturbraunstein) oder β-$MnO_2$ neben Li-Salzen, LiOH ·x $H_2O$ oder $Li_2CO_3$ verwendet werden. Für die erstgenannte keramische Synthese mit den Schritten a, b ist P-CMD besonders geeignet.

P-CMD ist ein feinporöses γ-$MnO_2$, das gemäß US-PS 5277890 auf naßchemischem Wege aus $MnSO_4$ und $Na_2S_2O_8$ hergestellt wird. Der Wassergehalt des LiOH kann zwischen x=0 und x=2 schwanken.

Die Glühtemperatur der stöchiometrisch angesetzten Mischungen während der Phase a liegt im Bereich 350°C bis 900°C, die Temperzeit bei 4 bis 80 h (an Luft).

Unter diesen Bedingungen erhaltene Spinelle zeichnen sich durch hohe Feststoffdichte und Schüttdichte aus.

Die Präparation geschieht z.B. auf folgende Weise:

Synthese 1:

Zur Darstellung eines Spinells der stöchiometrischen Zusammensetzung $Li_{1.04}Mn_{1.96}O_{3.94}$ werden 15.0000g P-CMD und 3.6295g LiOH x $1H_2O$ in einer Achatreibschale innig verrieben, das erhaltene Gemisch 4h bei 750°C in einem Korundtiegel an Luft geglüht, bei dieser Temperatur dem Ofen entnommen, an Luft auf Raumtemperatur abgekühlt, nochmals fein verrieben, weitere 16h bei 750°C geglüht und abschließend nach erneuter Entnahme bei der Präparationstemperatur aus dem Ofen an Luft abgekühlt.

Die Einphasigkeit des erhaltenen Materials kann anhand eines Röntgenpulverdiffraktogramms nachgewiesen werden. Dabei wird eine Gitterkonstante von a=8,237Å ermittelt.

Durch potentiometrische Titration (Fe(II)/Ce(IV)) wird die mittlere Oxidationsstufe des Mangans (Oxidationsgrad) ermittelt und zu 3,49 gefunden.

Die Bestimmung des Li- und Mn-Gehalts der Probe kann durch ICP- Analyse erfolgen.

Bei der abgewandelten keramischen Synthese können sowohl frische Präparate aus Schritt a als auch die aus der Synthese 1 erhaltenen Substanzen als Precursor dienen. Diese werden nunmehr einer Glühbehandlung in Gegenwart eines Ar/8%$H_2$-Gasgemisches unterzogen, bei der sich der Spinell zu einem Produkt mit niederwertigem Mangan -vorzugsweise $Mn^{2+}$- zersetzt. Eine direkte Reduktion des Ausgangsspinells bis zu einem definierten defizitären Sauerstoffgehalt ist grundsätzlich möglich, bedarf aber von Fall zu Fall der analytischen Kontrolle.

Erfindungsgemäß schließt sich daher an die reduktive Zersetzung eine erneute Glühbehandlung in einer Ar/$O_2$-Atmosphäre mit dem Ziel einer Aufoxidation bis zu einem bestimmten Sauerstoffgehalt an, wobei auch die Abkühlung am Ende in der gleichen, schwach sauerstoffhaltigen Schutzatmosphäre vorgenommen wird. Das erhaltene Endprodukt weist ein definiertes Sauerstoffdefizit auf und ist zugleich phasenrein.

Für die Nachbehandlungen werden die Temperaturen verwendet, welche schon zur Darstellung des Precursors dienten: 350°C bis 900°C.

Die Präparation eines O-defizitären Spinells in einem Zuge gelingt z.B. auf folgende Weise:

Synthese 2:

Zur Darstellung eines Spinells der Zusammensetzung $Li_{1.1}Mn_{1.9}O_{3.90}$ werden 12.7663g CMD und 3.3534g LiOH x $H_2O$ in einer Achatreibschale innig verrieben, das erhaltene Gemisch 4h bei 700°C in einem Korundtiegel an Luft geglüht, bei dieser Temperatur dem Ofen entnommen, an Luft auf Raumtemperatur abgekühlt, nochmals fein verrieben, weitere 16h bei 700°C geglüht und abschließend nach erneuter Entnahme bei der Präparationstemperatur aus dem Ofen an Luft abgekühlt.

Das erhaltene Material wird nun 3h bei 700°C in Ar/$H_2$ zersetzt und unter Ar/$H_2$ auf Raumtemperatur gequencht. Durch weitere Behandlung während 3.5h bei 700°C danach 2h bei 650°C mit Ar/8%$O_2$ und Abkühlen in dieser Gasmischung erhält man das gewünschte Endprodukt.

Aus dem in Fig.3 wiedergegebenen Röntgenpulverdiffraktogramm, das kubisch indizierbar ist und die Einphasigkeit des Materials belegt, wurde für diesen Spinell eine Gitterkonstante a=8,236 ermittelt.

Durch potentiometrische Titration (Fe(II)/Ce(IV)) wird die mittlere Oxidationsstufe des Mangans ermittelt, die sich zu 3,53 (theoret. 3,53) ergibt.

Die Bestimmung des Li- und Mn-Gehalts der Probe erfolgt wie bei Synthese 1 durch ICP-Analyse.

Der nach Synthese 2 hergestellte Spinell $Li_{1.1}Mn_{1.9}O_{3.90}$ ist in Fig. 2 (Ausschnittsvergrößerung des Phasendiagramms) als Stern eingetragen. Weitere O-defizitäre Spinelle gemäß der Erfindung, die durch Synthese 2 erhalten wurden, sind in dem gleichen oberen Segment des Einphasengebietes angesiedelt, auf ihre Eintragung wurde jedoch verzichtet.

Bei jeweils zwei hinsichtlich der Materialeinwaage völlig gleichen Präparaten ergab die Analyse einen geringfügigen Unterschied im O-Gehalt, je nachdem, ob als Ausgangsmaterial β-$MnO_2$ oder CMD eingesetzt worden war. Diese Präparate wiesen die folgenden Zusammensetzungen auf:

$$\left.\begin{array}{ll} Li_{1,2}Mn_{1,8}O_{3,93} & (\beta-MnO_2) \\ Li_{1,2}Mn_{1,8}O_{3,96} & (CMD) \end{array}\right\} Z_1$$

$$\left.\begin{array}{ll} Li_{1,3}Mn_{1,7}O_{3,84} & (\beta-MnO_2) \\ Li_{1,3}Mn_{1,7}O_{3,85} & (CMD) \end{array}\right\} Z_2$$

Ihre Orte im Phasendiagramm sind mit $Z_1$ bzw. $Z_2$ bezeichnet.

Die Einstellung eines etwas höheren Sauerstoffdefizits scheint durch die Verwendung von $\beta$-$MnO_2$ begünstigt zu sein.

In einer Abwandlung der Erfindung können in die beschriebenen Synthesen anstelle eines Teils der Lithiumverbindung auch Metallverbindungen mit mehrwertigen Metallkationen als Ausgangssubstanzen mit einbezogen werden, so daß sich fremddotierte Lithiummanganspinelle mit Sauerstoffdefizit ergeben. Für die Umsetzung eignen sich beispielsweise Oxide, Karbonate oder Salze von Metallen aus der Reihe Co, Mg, Zn, Ni, Ca, Bi, Ti, V, Rh und Cu, gegebenenfalls auch die reinen Elemente.

Die Gitterkonstanten der erfindungsgemäßen O-defizitären Spinelle unterscheiden sich praktisch nicht von denen bekannter Spinelle, die durch die allgemeine Formel $Li_{1+x}Mn_{2-x}O_{4+\delta}$ , wobei $0 \le x \le 0,33$ und $0 < \delta < 0,5$ (vgl. US-PS 5316877) beschrieben werden. Sie zeigen mit steigenden Werten von x einen linearen Abfall von a = 8,25Å bei x = 0 bis ca. 8,16Å bei x = 0,33. Die Kontraktion des Gitters in dieser Richtung ist erwartungsgemäß, da im $Li_{1.33}Mn_{1.67}O_4$ alles Mangan im vierwertigen Zustand vorliegt und die $Mn^{4+}$-Ionen einen kleineren Radius als die $Mn^{3+}$-Ionen besitzen. Die Gitterkonstanten allein liefern also keinen Hinweis auf das Vorliegen eines O-defizitären Spinells.

Bemerkenswert für O-defizitäre Spinelle ist dagegen eine nichtlineare Abhängigkeit der Oxidationsstufe des Mangans (Oxidationsgrad) vom Lithiumgehalt x. Dabei spielt das $Mn^{4+}/Mn^{3+}$-Verhältnis für die Fähigkeit der Lithiummanganoxid-Spinelle zur Li-Extraktion und Li-Intercalation, die sowohl chemisch als auch elektrochemisch erfolgen kann, eine entscheidende Rolle.

In Fig. 4 ist dargestellt, wie sich der Oxidationsgrad ($Mn^{4+}/Mn^{3+}$-Verhältnis) innerhalb der Spinellphase $Li_{1+x}Mn_{2-x}O_{4-\delta}$ mit steigendem x verändert. Für $\delta = 0$ steigt der Oxidationsgrad mit x linear an (errechnete Gerade), bis die Li-Intercalation mit x = 1/3 bei dem Spinell $Li_{4/3}Mn_{5/3}O_4$ endet. Dieser ist trotz seines hohen Li-Gehalts einer Li-Deintercalation nicht zugänglich (theoretisch müßte eine spezifische Kapazität von 216mAh erzielbar sein, wenn alles $Li_x$ reversibel gezykelt wird), weil alles Mangan als $Mn^{4+}$ vorliegt und dessen weitere Oxidation unter normalen Bedingungen nicht möglich ist.

Weist der Spinell jedoch erfindungsgemäß ein Sauerstoffdefizit $-\delta > 0$ auf, so findet man gemäß Fig. 4 für diese Substanzen, deren steigende Li-Gehalte x hier mit steigenden Sauerstoffdefiziten bis $-\delta = 0,2$ korrespondieren, eine immer stärkere Abweichung des $Mn^{4+}/Mn^{3+}$-Verhältnisses von der errechneten Geraden zugunsten eines Restgehaltes an $Mn^{3+}$.

Der Oxidationsgrad liegt vorzugsweise zwischen 3,5 und 3,8. Das bedeutet, daß sogar der $Li_{4/3}Mn_{5/3}O_{4-\delta}$, Spinell aufgrund seines Restgehaltes an $Mn^{3+}$ noch mit einer entsprechend geringen Kapazität von etwa 20 bis 50mAh/g gezykelt werden kann.

Ebenso wie die nichtlineare Abhängigkeit des Mn-Oxidationsgrades von x ist die -daraus zwangsläufig folgende- nichtlineare Abhängigkeit der Entladekapazität von x ein sicheres Kriterium für das Vorliegen eines O-defizitären Spinells. Der letztere Zusammenhang wird aus Fig. 5 deutlich.

Dort sind für mehrere O-defizitäre Spinelle Entladekapazitäten C [mAh/g] -jeweils nach 5 Zyklen gemessen- gegen den Li-Gehalt x aufgetragen. Während bei bekannten Spinellen ohne Sauerstoffdefizit bei x = 0,33 alles Mn 4-wertig sein müßte und eine Entladung nicht möglich sein dürfte, liefert die tatsächlich beobachtete Kapazität von ca. 40mAh/g den Beweis dafür, daß ein O-defizitärer Spinell vorliegt.

Es wurde außerdem gefunden, daß sich von den verschiedenen zur Herstellung der Spinelle eingesetzten Manganoxid-Qualitäten das $\beta$-$MnO_2$ anscheinend besonders günstig auf das Kapazitätsverhalten auswirkt.

Dies steht im Einklang mit der bereits erwähnten Beobachtung, daß $\beta$-$MnO_2$ tendenziell ein etwas größeres Sauerstoffdefizit hervorruft als CMD.

Die bevorzugte Eignung des $\beta$-$MnO_2$ für die keramische Synthese O-defizitärer Spinelle findet schließlich auch darin eine Bestätigung, daß bei diesen Präparaten die durch eine Hochtemperatur (HT)-Lagerung in Kauf zu nehmende

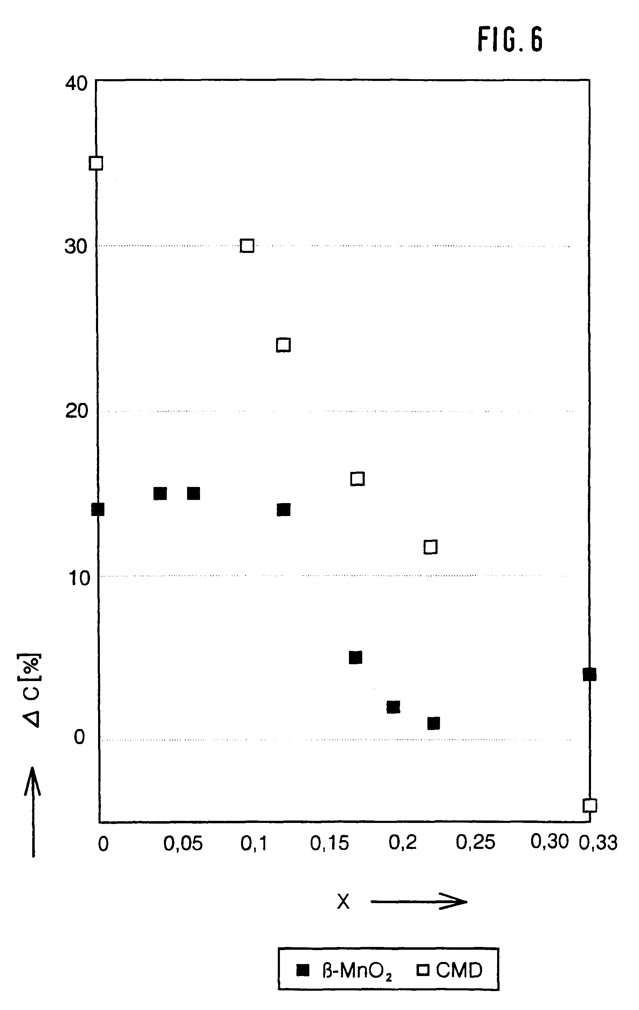

Kapazitätseinbuße verhältnismäßig gering ist. So läßt sich aus Fig. 6 ersehen, daß erfindungsgemäße Spinelle mit β-$MnO_2$ hergestellt nach der 5. zyklischen Entladung, welcher eine 7-tägige HT-Lagerung bei 60°C vorangegangen war, nur Kapazitätsverluste ΔC[%] zwischen 0% und 15% aufweisen im Vergleich zu nicht HT-gelagerten Proben, während die durch HT-Lagerung bedingten Kapazitätseinbußen bei den mit CMD hergestellten Spinellen beträchtlich schwanken und bis zu 35% höher liegen.

Insgesamt aber zeichnen sich die O-defizitären Spinelle gemäß der Erfindung im Vergleich zu bekannten Spinellen des Typs $Li_{1+x}Mn_{2-x}O_{4+\delta}$ auch durch gute Zyklenstabilitäten und geringfügig höhere mittlere Entladespannungen aus. Durch das spezielle Herstellungsverfahren unter zeitweiliger Einwirkung einer $Ar/H_2$-At-mosphäre (Synthese 2) wird eine noch größere Feststoffdichte und Schüttdichte erzielt, als dies bei Synthese 1 der Fall ist. Damit bieten sich O-defizitäre Spinelle besonders dafür an, die volumenbezogene Energiedichte von Wickelzellen und prismatischen Zellen zu verbessem.

**Patentansprüche**

1. Elektrochemisches Sekundärelement mit einer negativen Elektrode, enthaltend Lithium als aktives Material, einer positiven Elektrode mit einem Lithiummanganoxid-Spinell als aktives Material und einem nichtwässrigen Elektrolyten, dadurch gekennzeichnet, daß das Material der positiven Elektrode ein sauerstoffdefizitärer Lithiummanganoxid-Spinell der allgemeinen Zusammensetzung

   $$Li_{1+x}\,Mn_{2-x}\,O_{4-\delta} \text{ ist}$$

   mit

   $$0 \leq x \leq 0{,}33 \text{ und } 0{,}01 \leq \delta \leq 0{,}5,$$

   ausgenommen alle $x = ½\,\delta \pm 0{,}01$.

2. Elektrochemisches Sekundärelement nach Anspruch 1, dadurch gekennzeichnet, daß das Material der positiven Elektrode ein sauerstoffdefizitärer Lithiummanganoxid-Spinell der allgemeinen Zusammensetzung

   $$Li_{1+x}\,Mn_{2-x}\,O_{4-\delta} \text{ ist}$$

   mit

   $$0 \leq x \leq 0{,}33 \text{ und } 0{,}05 \leq \delta \leq 0{,}5,$$

   ausgenommen alle $x = ½\,\delta \pm 0{,}05$.

3. Elektrochemisches Sekundärelement nach einem der Ansprüche 1 und 2, dadurch gekennzeichnet, daß ein Teil des Li-Anteils x durch ein zusätzliches ein- oder mehrwertiges metallisches Kation ausgewählt aus der Reihe Co, Mg, Zn, Ni, Ca, Bi, Ti, V, Rh und Cu ersetzt ist.

4. Verfahren zur Herstellung eines sauerstoff-defizitären Spinells als aktives Material für die positive Elektrode eines elektrochemischen Sekundärelements nach einem der Ansprüche 1 oder 2, dadurch gekennzeichnet, daß das Verfahren folgende Schritte umfaßt:

   a. Reaktion eines lithiumhaltigen Bestandteils, ausgewählt aus der Gruppe Lithiumsalze LiOH x $H_2O$, $Li_2CO_3$ mit einem Manganoxid bei Temperaturen zwischen 350°C und 900°C

   b. Nachglühen des Materials bei 500°C bis 850°C und Abkühlen.

5. Verfahren nach Anspruch 4, dadurch gekennzeichnet, daß nach der Reaktion des lithiumhaltigen Bestandteils mit Manganoxid eine Behandlung des Reaktionsprodukts in einer $Ar/H_2$-Atmosphäre bei 600°C bis 850°C und Abkühlen des erhaltenen Materials unter $Ar/H_2$ auf Raumtemperatur erfolgt und daß ein Nachglühen des Materials bei 500°C bis 850°C und Abkühlen unter $Ar/O_2$ angeschlossen wird.

**6.** Verfahren nach einem der Ansprüche 4 oder 5, dadurch gekennzeichnet, daß neben dem lithiumhaltigen Bestandteil ein Oxid, ein Karbonat oder eine salzartige Verbindung eines der Metalle Co, Mg, Zn, Ni, Ca, Bi, Ti, V, Rh und Cu, gegebenenfalls auch das reine Metall, als zusätzlicher Reaktionspartner eingesetzt wird.

**Claims**

**1.** An electrochemical secondary cell having a negative electrode containing lithium as active material, having a positive electrode containing a lithium manganese oxide spinel as active material and having a nonaqueous electrolyte, wherein the material of the positive electrode is an oxygen-deficient lithium manganese oxide spinel of the general composition

$$Li_{1+x}Mn_{2-x}O_{4-\delta}$$

where

$$0 \leq x \leq 0.33 \text{ and } 0.01 \leq \delta \leq 0.5,$$

excluding all compositions where $x = \frac{1}{2}\delta \pm 0.01$.

**2.** An electrochemical secondary cell as claimed in claim 1, wherein the material of the positive electrode is an oxygen-deficient lithium manganese oxide spinel of the general composition

$$Li_{1+x}Mn_{2-x}O_{4-\delta}$$

where

$$0 \leq x \leq 0.33 \text{ and } 0.05 \leq \delta \leq 0.5,$$

excluding all compositions where $x = \frac{1}{2}\delta \pm 0.05$.

**3.** An electrochemical secondary cell as claimed in either of claims 1 or 2, wherein some of the Li component x is replaced by an additional monovalent or multivalent metallic cation selected from the series consisting of Co, Mg, Zn, Ni, Ca, Bi, Ti, V, Rh and Cu.

**4.** A method for producing an oxygen-deficient spinel as active material for the positive electrode of an electrochemical secondary cell as claimed in either of claims 1 or 2, wherein the method comprises the following steps:

a. reaction of a lithium-containing constituent selected from the group consisting of lithium salts, $LiOH \cdot xH_2O$ and $Li_2CO_3$ with a manganese oxide at temperatures between 350°C and 900°C,
b. afterroasting of the material at 500°C to 850°C and cooling.

**5.** The method as claimed in claim 4, wherein, after the lithium-containing constituent has reacted with manganese oxide, the reaction product is treated in an $Ar/H_2$ atmosphere at 600°C to 850°C and the material obtained is cooled to room temperature under $Ar/H_2$ and wherein this is followed by an afterroasting of the material at 500°C to 850°C and cooling under $Ar/O_2$.

**6.** The method as claimed in either of claims 4 or 5, wherein, in addition to the lithium-containing constituent, an oxide, a carbonate or a salt-like compound of one of the metals Co, Mg, Zn, Ni, Ca, Bi, Ti, V, Rh and Cu and optionally also the pure metal is used as additional coreactant.

**Revendications**

1. Pile secondaire électronique ayant une électrode négative, contenant du lithium comme matériau actif, une électrode positive avec un spinelle d'oxyde de manganèse et de lithium comme matériau actif et un électrolyte non aqueux, caractérisée en ce que
le matériau de l'électrode positive est un spinelle d'oxyde de manganèse et de lithium déficitaire en oxygène de composition générale :

$$Li_{1+x}Mn_{2-x}O_4\text{-}\delta$$

avec $O \leq x \leq 0{,}33$ et $0{,}01 \leq \delta \leq 0{,}5$,
à l'exception de tous les $x = ½\ \delta \pm 0{,}01$.

2. Pile secondaire électrochimique selon la revendication 1,
caractérisée en ce que
le matériau de l'électrode positive est un spinelle d'oxyde de manganèse et de lithium déficitaire en oxygène de composition générale :

$$Li_{1+x}Mn_{2-x}O_4\text{-}\delta$$

avec $0 \leq x \leq 0{,}33$ et $0{,}05 \leq \delta \leq 0{,}5$
à l'exception de tous les $x = ½\ \delta \pm 0{,}05$.

3. Pile secondaire électrochimique selon une des revendications 1 et 2,
caractérisée en ce qu'
une partie de la proportion de Lix est remplacée par un cation métallique additionnel mono ou pulrivalent choisi dans la série Co, Mg, Zn, Ni, Ca, Bi, Ti, V, Rh et Cu.

4. Procédé de production d'un spinelle déficitaire en oxygène comme matériau actif pour l'électrode positive d'une pile secondaire électrochimique selon une des revendications 1 ou 2,
caractérisé en ce que
le procédé comprend les étapes suivantes :

   a) réaction d'un composant contenant du lithium, choisi dans le groupe des sels de lithium LiOH x $H_2O$, $Li_2CO_3$, avec un oxyde de manganèse à des températures comprises entre 350°C et 900°C.
   b) recuit ultérieur du matériau de 500°C à 850°C et refroidissement.

5. Procédé selon la revendication 4,
caractérisé en ce qu'
après la réaction du composant contenant du lithium avec de l'oxyde de manganèse est réalisé un traitement du produit de la réaction dans une atmosphère de $Ar/H_2$ de 600°C à 850°C et refroidissement du matériau obtenu sous $Ar/H_2$ à la température ambiante et en ce qu'un recuit ultérieur du matériau de 500°C à 850°C et refroidissement sous $Ar/O_2$ fait suite.

6. Procédé selon une des revendications 4 ou 5,
caractérisé en ce que
outre le composant contenant du lithium est utilisé un oxyde, un carbonate ou un composé du type sel d'un des métaux Co, Mg, Zn, Ni, Ca, Bi, Ti, V, Rh et Cu, essentiellement aussi le métal pur, comme partenaire supplémentaire de la réaction.

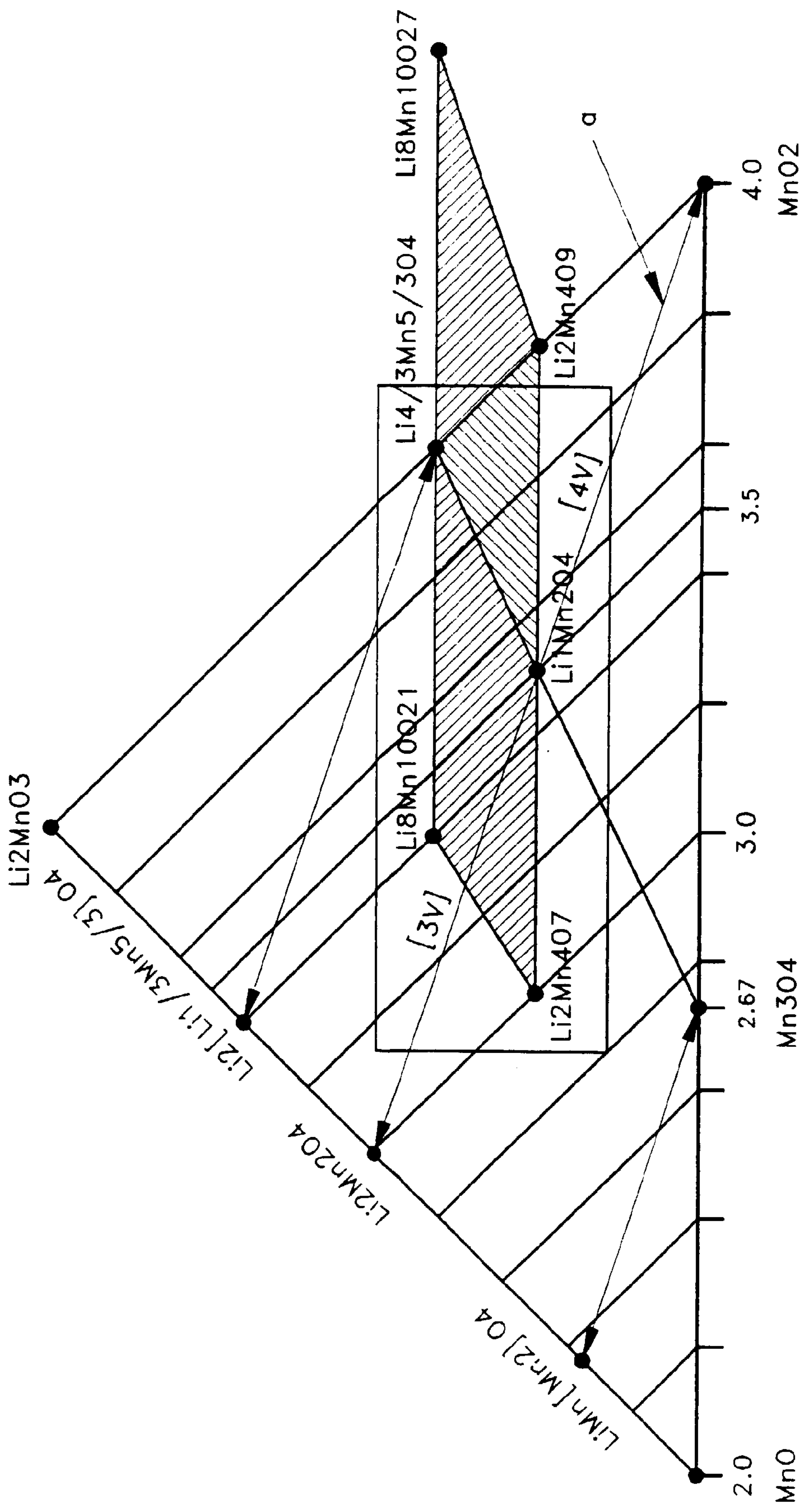
Li8Mn10O27
a
4.0
MnO2
Li4/3Mn5/3O4
Li2Mn4O9
[4V]
3.5
Li1Mn2O4
Li8Mn10O21
Li2MnO3
3.0
Li2[Li1/3Mn5/3]O4
[3V]
Li2Mn4O7
2.67
Mn3O4
Li2Mn2O4
LiMn[Mn2]O4
2.0
MnO

FIG.1

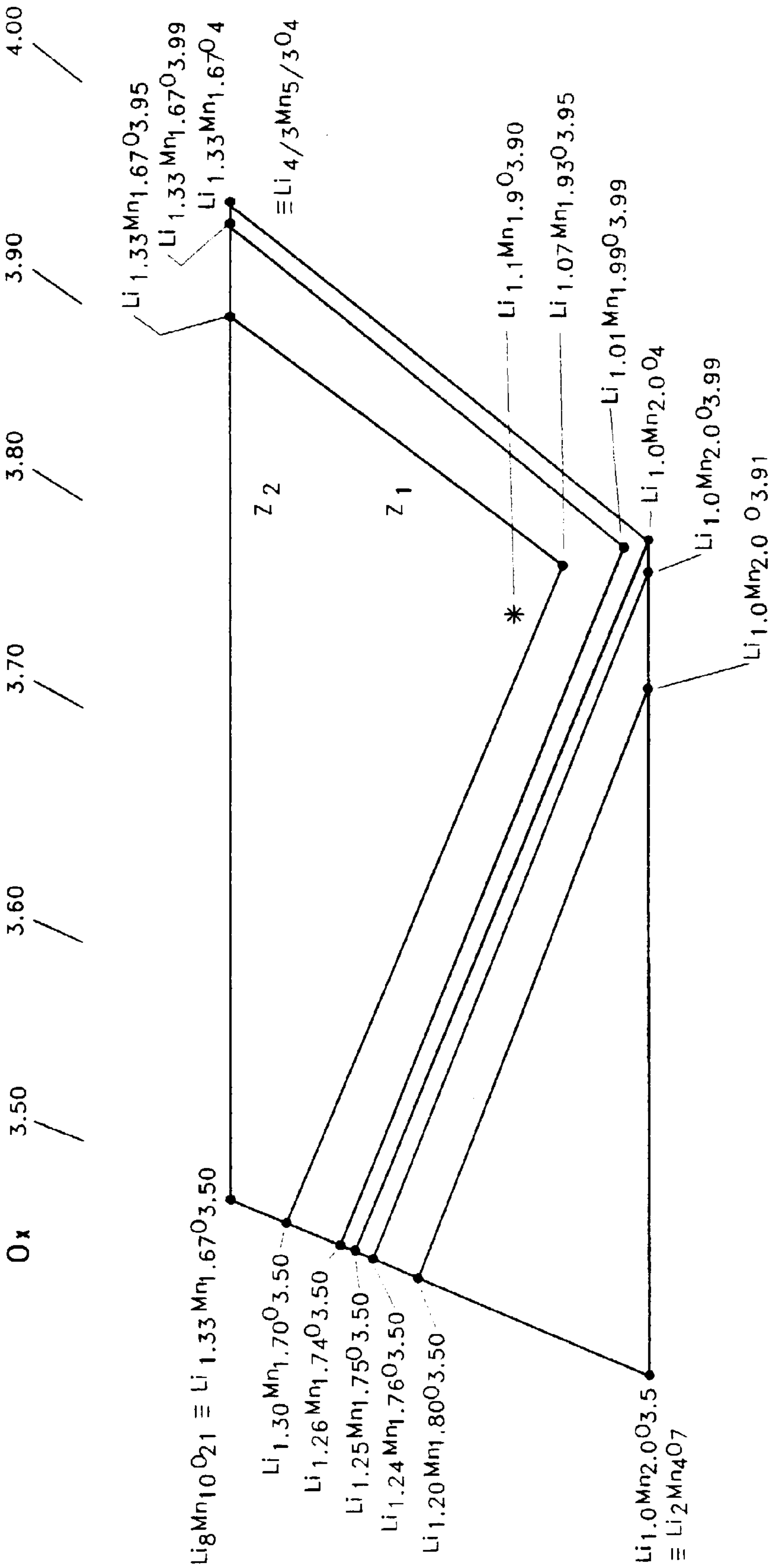
Ox
3.50
3.60
3.70
3.80
3.90
4.00
Z 2
Z 1
*
$Li_8Mn_{10}O_{21} \equiv Li_{1.33}Mn_{1.67}O_{3.50}$
$Li_{1.30}Mn_{1.70}O_{3.50}$
$Li_{1.26}Mn_{1.74}O_{3.50}$
$Li_{1.25}Mn_{1.75}O_{3.50}$
$Li_{1.24}Mn_{1.76}O_{3.50}$
$Li_{1.20}Mn_{1.80}O_{3.50}$
$Li_{1.0}Mn_{2.0}O_{3.5} \equiv Li_2Mn_4O_7$
$Li_{1.33}Mn_{1.67}O_{3.95}$
$Li_{1.33}Mn_{1.67}O_{3.99}$
$Li_{1.33}Mn_{1.67}O_4$
$\equiv Li_{4/3}Mn_{5/3}O_4$
$Li_{1.1}Mn_{1.9}O_{3.90}$
$Li_{1.07}Mn_{1.93}O_{3.95}$
$Li_{1.01}Mn_{1.99}O_{3.99}$
$Li_{1.0}Mn_{2.0}O_4$
$Li_{1.0}Mn_{2.0}O_{3.99}$
$Li_{1.0}Mn_{2.0}O_{3.91}$

FIG. 2

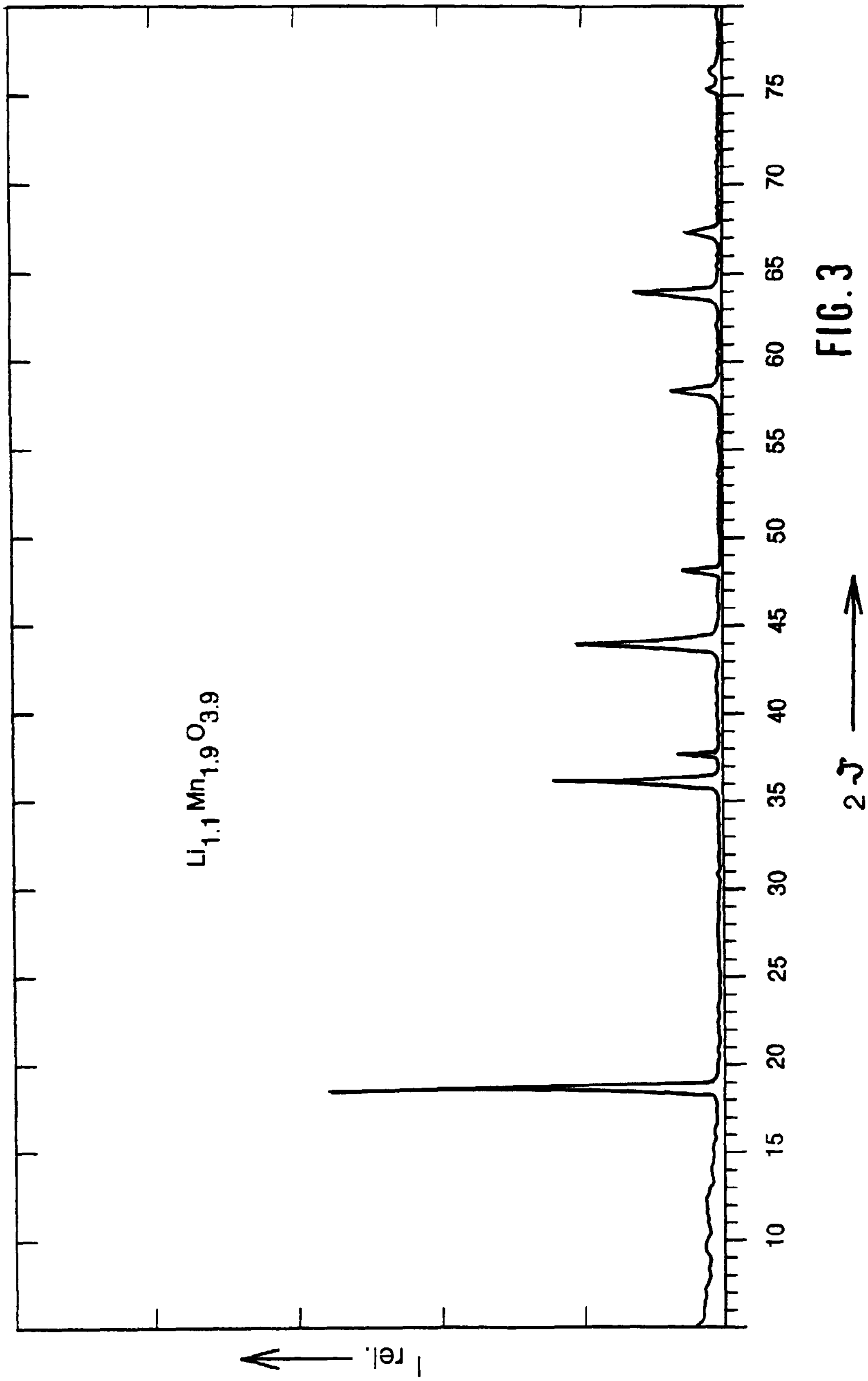


FIG. 3

FIG. 4

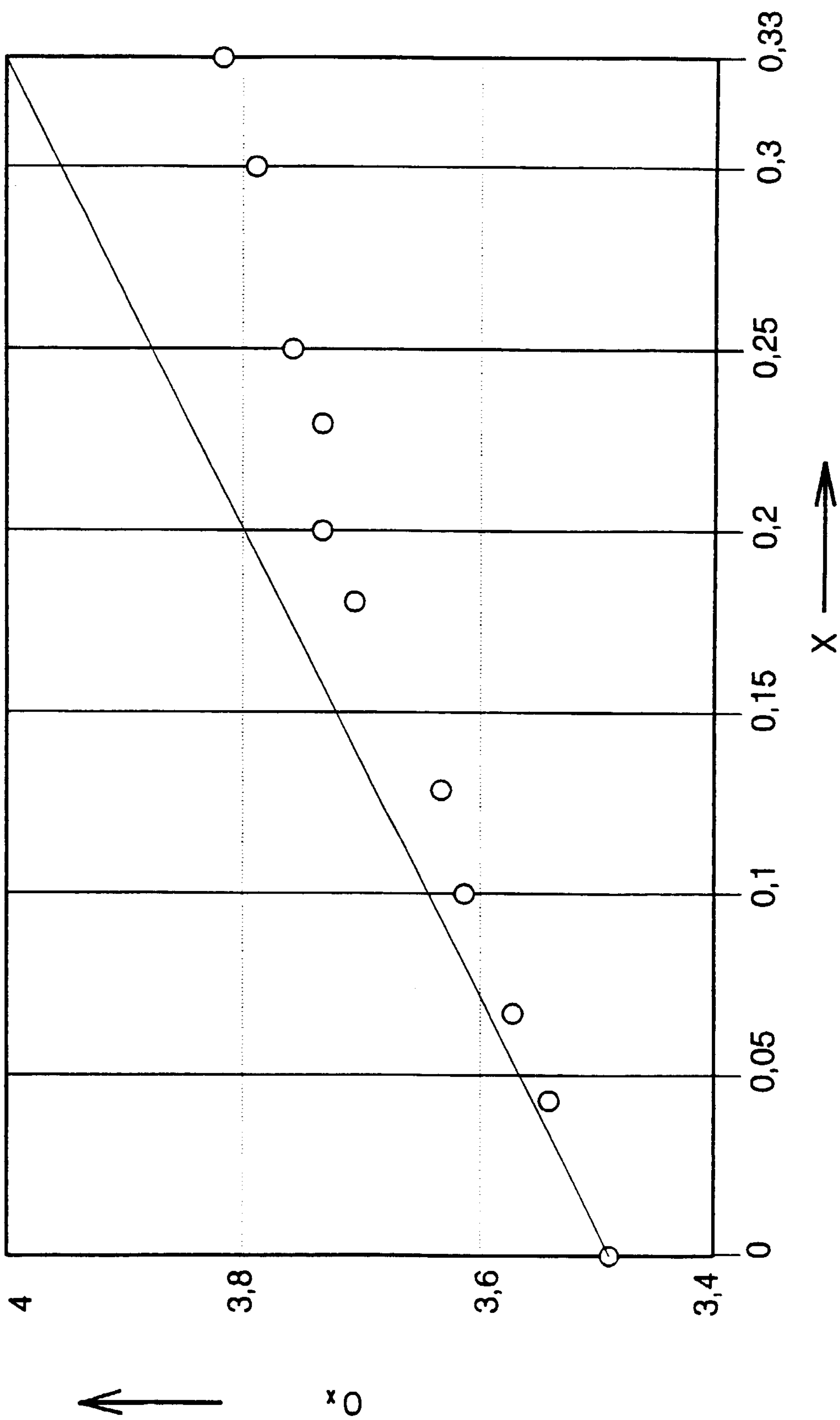

FIG.5

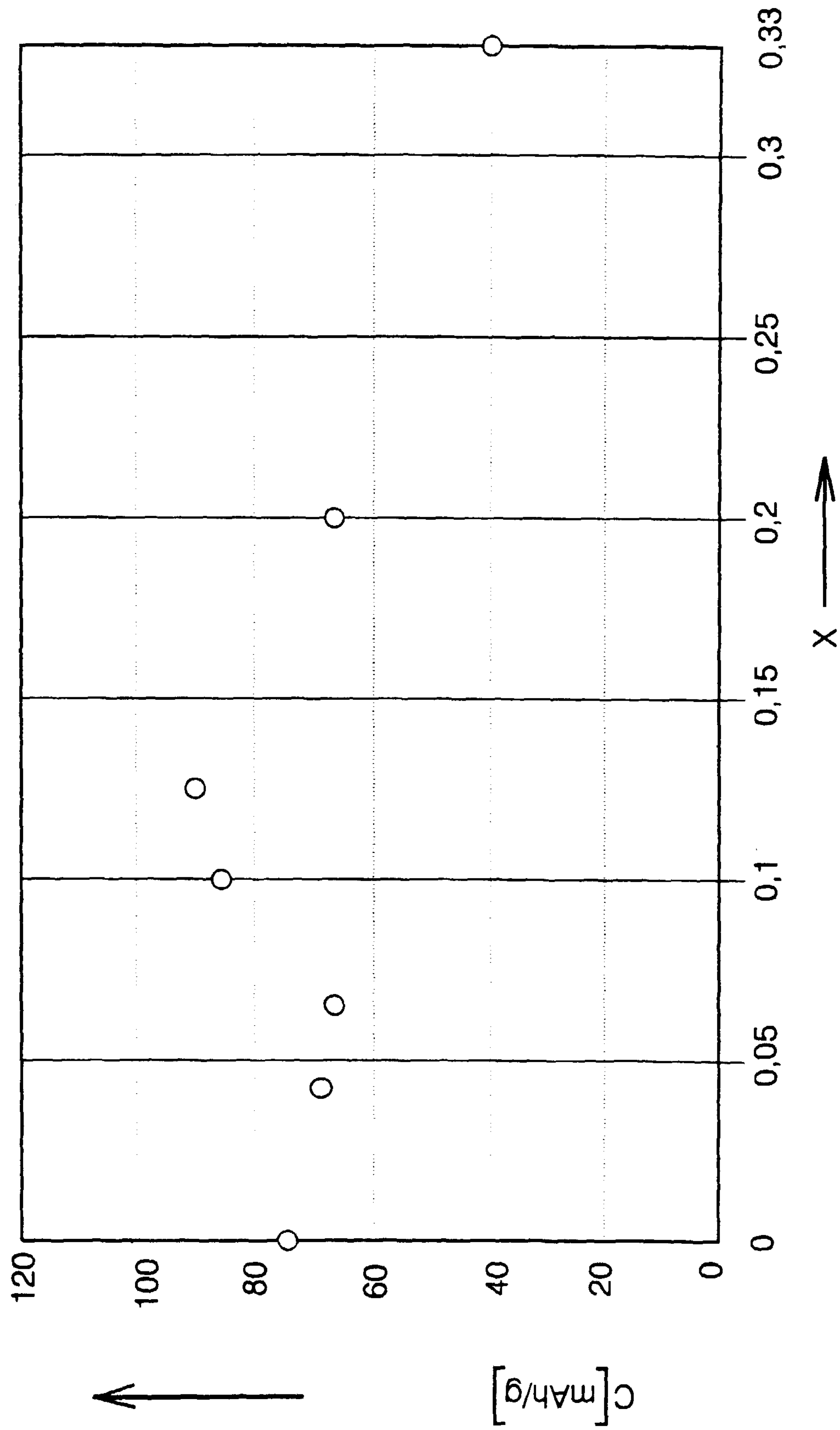

FIG. 6